# EUROPEAN PATENT APPLICATION

(11) **EP 2 982 591 A1**
(43) Date of publication of application: **10.02.2016**
(21) Application number: 14002768.1
(22) Date of filing: 07.08.2014
(51) Int. Cl.: B62M 6/40, B62K 19/16

(54) **E-Bike with composite chassis made of two half shells**

(71) Applicant: Myftiu, Marin, Tirana (AL); Moro, Franco, Treviso (IT); Almossawi, Hussain, North Sehla (BH)
(72) Inventor: Myftiu, Marin, Tirana (AL); Moro, Franco, Treviso (IT); Almossawi, Hussain, North Sehla (BH)
(74) Representative: Dodbiba, Eno

(57) **Abstract**

An nCycle e-bike frame includes two corresponding half-shells (1) and (2) which include an auxiliary cavity (1a) and (2a), battery hatch cavity (1b) and (2b), motor housing cavity (1c) and (2c), seat post column channel (1d) and (2d), steering column channel (1e) and (2e), steering column stopper (1f), rear fork (1g) and (2g), rear hub mounting (1h) and (2h), brake caliper mounting points (2j), outer membrane (1k) and (2k) and internal ribs (11), (21). A locking system comprised of two sliding pistons (29) and (30) and a locking mechanism (31) can be added.

The crank electric motor (25) and battery (24) are enclosed between the two half shells (1) and (2), thus providing a smoother and safer structure for the rider. The integrated locking system and auxiliary hatch make the frame more flexible and easier to use compared to previous implementations.

## Description

The present invention relates to a composite frame for e-bikes and its complementary accessories.

### Indication of the background of the art

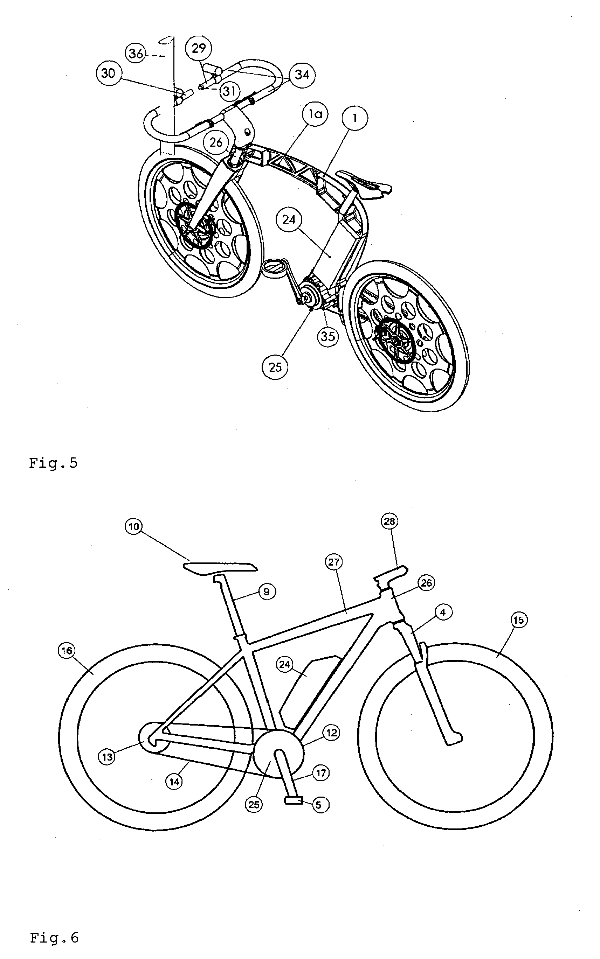

A conventional e-bike art shown in fig.6 comprises a standard frame (27) where a handle bar (28) is attached to control the vehicle through steering the front wheel (15). The rider sits on the seat (10), which is connected to the frame through an adjustable seat post (9) and powers the vehicle through a standard pedal (5) and crank (17) system. The rider's power is assisted by a central, crank hub motor (25) which is powered by a battery (24). Is to be noted that the current e-bike designs derive their frame from standard bicycles, leading to several technical and practical shortcomings like exposed parts, complicated structure and lack of the ability to transport payloads efficiently.

### Technical problem to be solved

The objective of the invention is to provide a frame design which simplifies the frame manufacturing, creates native housing for elements such as motor, battery and auxiliary storage compartment as well as simplifying to simplify locking.

### Disclosure of invention

In accordance with the present invention is here provided an e-bike frame made out of two parts of cast metal or composite material joined by screws, bolts or other methods, which provides standard attachment to a handle bar and steering column, an adjustable seat post, a front and rear attachment for front and rear wheels.

Moreover, the innovative design of the frame provides a custom motor housing for the crank motor and a custom battery housing, which simplifies manufacturing processes and provides extra protection for the electric drive elements.

Other advantages of the current designs include an easier cleaning and maintenance as well as a geometry that is more pleasing and less prone to accidents and injuries because smoother and safer surfaces are involved instead of tubes.

The handle bar which attaches to the frame adds the functionality of a built-in locking system.

In the drawings:
**Fig.1** is a right side view of a frame in accordance with the preferred embodiment of the present innovation.
**Fig.2** is a left side view of a frame in accordance with the preferred embodiment of the present innovation.
**Fig.3** is an interior side view of the right part of the frame described showing the structural ribs, the resulting custom hatches, cavities and screw holes.
**Fig.4** is an interior side view of the left part of the frame described showing the structural ribs, the resulting custom hatches, cavities and screw holes.
**Fig.5** is an orthographic 3D view of the frame in accordance with the preferred embodiment of the present innovation which has the left part of the frame removed to show in more detail the interior.
**Fig.6** is a simplified side view of a standard e-bike upon which the frame described is based with the relevant parts indicated.

### Description of at least one way of carrying out the invention

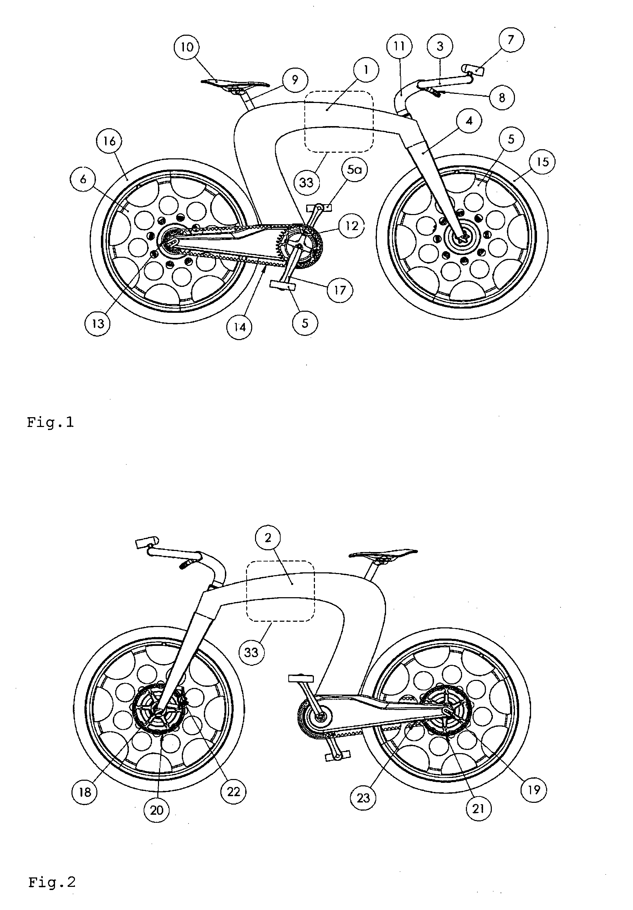

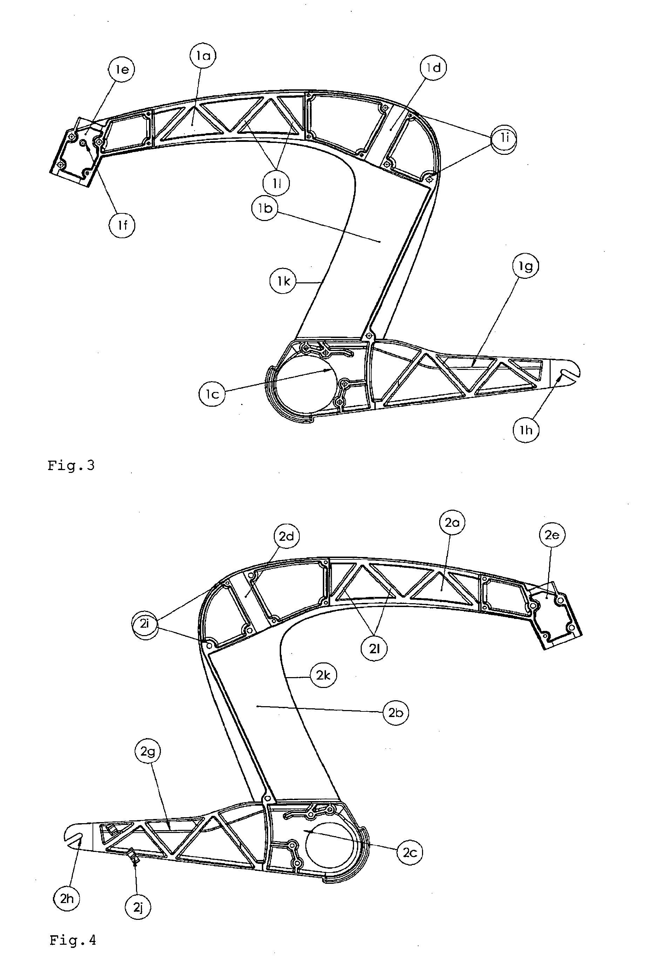

Referring to fig. 1-6, an e-bike frame (27) for e-bikes in accordance with the preferred embodiment of the present invention comprises two cast, corresponding half-shells (1) and (2) which include features such as auxiliary cavity (1a) and (2a), battery hatch cavity (1b) and (2b), motor housing cavity (1c) and (2c), seat post column channel (1d) and (2d), steering column channel (1e) and (2e), steering column stopper (1f), rear fork (1g) and (2g), rear hub mounting (1h) and (2h), brake caliper mounting points (2j), outer membrane (1k) and (2k) and internal ribs (11), (21).

The crank electric motor (25) is enclosed between the two half shells (1) and (2) and secured through the motor bolts (35). The encased battery (24) which supplies power to the crank motor (25) is located right above the crank motor inside the battery hatch (1b) and (2b).

Power is applied to vehicle by the rider by applying force on the pedal (5) and crank (17) system. The force is transmitted from the crown (12) to a pinion (13) through a transmission chain or belt (14) and is subsequently applied to the rear wheel (16) to make the vehicle advance. The above bicycle operation is aided like in any power-assisted e-bike, by the crank motor (25).

The auxiliary cavity (1a) can be used to house an optional payload (33) comprising a removable bag, a pocket or an auxiliary battery.

The u-shaped handle bar (3) can support handles (34), front lights (7), brakes (8) and a locking system comprised of two sliding pistons (29) and (30) and a locking mechanism (31). To lock the e-bike the user has to fit a road pole, bar or similar (36) inside the arms of the handle bar, slide the sliding pistons (29) and (30) towards each other until the locking system (31) binds them together.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications or variations that fall within the true scope of the invention.

## Claims

1. A composite e-bike frame comprising:
two half-shells (1) and (2);
an auxiliary cavity (1a) and (2a);
a battery hatch cavity (1b) and (2b);
a motor housing cavity (1c) and (2c);
a seat post column channel (1d) and (2d);
a steering column channel (1e) and (2e);
a steering column stopper (1f);
a rear fork (1g) and (2g)
a rear hub mounting (1h) and (2h);
mounting screw holes (1i) and (2i);
motor mounting holes (42);
a brake caliper mounting points (2j);
outer membrane (1k) and (2k);
internal ribs (11)and (21)

2. The composite frame in accordance with claim 1 wherein:
auxiliary cavity (1a) and (2a) is occupied by an auxiliary load (33), which can be a removable bag, a pocket or an auxiliary battery.

3. The composite frame in accordance with claim 1 wherein:
The handle bar (3) is laid out like shown in fig. 5 and is comprised of tubular handle bar (3), handles (34), brake levers (8), right sliding piston (29), left sliding piston (30), and a locking mechanism (31);
